# EUROPEAN PATENT SPECIFICATION

(11) **EP 1 837 631 B1**
(45) Date of publication and mention of the grant of the patent: **14.05.2008**
(21) Application number: 06005681.9
(22) Date of filing: 20.03.2006
(51) Int. Cl.: G01D 11/30, G01L 19/00

(54) **Method and structure for attaching a sensor to a sensor attachment member**
Verfahren und Struktur zur Befestigung eines Sensors an einem Sensorbefestigungselement
Procédé et structure de fixation d'un capteur à un élément de fixation de capteur

(43) Date of publication of application: 26.09.2007
(73) Proprietor: Ford Global Technologies, LLC, Dearborn, MI 48126 (US)
(72) Inventor: Salo, Timo, 430 63 Hindäs (SE); Sjöholm, Niklas, 417 27 Göteborg (SE); Chini, Mahmoud, 414 56 Göteborg (SE); Köppel, Anna, 413 16 Göteborg (SE); Kallander, Jonas, 426 55 Västra Frölunda (SE)
(74) Representative: Hammond, Andrew David

(56) References cited:
- US-A- 5 945 606

## Description

### TECHNICAL FIELD

The present invention is related to a method and a structure for attaching a sensor to a sensor attachment member by inserting a sensor protruding portion of the sensor into a through hole of the sensor attachment member via an elastic member.

### BACKGROUND OF THE INVENTION

One type of sensors, which is commonly used in the automotive industry, are the so called manifold absolute pressure sensors (MAP), which are usually coupled to the intake manifold of automotive vehicles.

The MAP sensor (manifold absolute pressure) is one of the sensors used in an internal combustion engine's electronic control system. Manifold absolute pressure is an accurate indicator of the mass of fuel an engine requires, whereas vacuum is only a differential to some other pressure. Carburetors relied significantly on vacuum, and although they were precise, they were not accurate fuel metering systems, and therefore unable to satisfy modern automotive emissions control legislation. Accurate and precise air mass measurement is required to meter fuel mass in a stoichiometric manner to achieve acceptable emission control under all operating conditions. A MAP sensor is a component used in the speed-density method of accurately determining the engine's air mass flow rate. The manifold absolute pressure measurement is critical to an engine's electronic control unit (ECU) in order to calculate operating requirements in order to satisfy modern automotive emissions control legislation.

US 5 945 606 describes an elastic member for attaching a sensor having a protruding portion to a sensor attachment member. The elastic member has a body member having a hollow shape, a first end protrusion formed on an inner surface of the body member close to a first end thereof, and a second end flange protruding outwardly from an outer surface of the body member close to a second end thereof. The sensor protruding portion is inserted into the elastic member from the second end of the elastic member to be a provisionally fixed state, and is inserted into the through hole of the sensor attachment member while keeping the provisionally fixed state. Thereafter, only the sensor protruding portion is additionally inserted into the through hole of the sensor attachment member.
The elastic member has a first end flange protruding from the outer surface of the body member at the position close to the first end of the elastic member. Accordingly, when the sensor protruding portion is more deeply inserted into the elastic member as well as into the through hole of the sensor attachment member, the sensor protruding portion expands the tapered portion of the elastic member so that a fore end portion thereof protrudes from the elastic member, so that the first end flange abuts the other surface of the sensor attachment member. As a result, the elastic member can be prevented from disconnecting from the through hole of the sensor attachment member.

In this case, however, when the protruding portion of the sensor is inserted into the through hole of the sensor attachment member, it is necessary that the first end flange of the elastic member passes completely through the through hole of the sensor attachment member such that no part of the first end flange of the elastic member is elastically deformed and remains caught in the through hole of the sensor attachment member. If this happens, the elastic member may disconnect from the through hole of the sensor attachment member or at the least provide insufficient sealing properties of the sensor attachment.

Accordingly, in the process of attaching the sensor to the sensor attachment member, the first end flange may become elastically deformed and remain caught in the through hole of the sensor attachment member, thereby resulting in an uncertain attachment status and a risk of insufficient sealing properties of the sensor attachment, which in turn might lead to emission related problems in the case of the sensor being a MAP sensor.

### SUMMARY OF THE INVENTION

An object of the present invention is to provide an improved method for attaching a sensor to a sensor attachment member via an elastic member, having a hollow shape and being attached on a sensor protruding portion on the sensor to cover the sensor protruding portion such that the fore end portion of the sensor protruding portion protrudes from the elastic member, where the elastic member has a first flange formed on an outer surface on a second end thereof and a tapered flange portion on a first end side having a diameter which decreases toward the first end thereof, both flanges protruding outwardly in the radial direction thereof.

According to a first aspect of the present invention this object is achieved in accordance with the characterizing portion of claim 1, which specifies that the method comprises the steps of: inserting the elastic member into a through hole of the sensor attachment member until the first flange abuts a first side surface of the sensor attachment member rendering the tapered flange portion at least partially deformed within the through hole, and; turning the sensor in the trough hole such that at least one protruding engagement part of the sensor engages at least one mounting member arranged adjacent the through hole, and; turning the sensor further whereby the engagement between the mounting member and the protruding engagement part is arranged to cause a predetermined inserting pressure to be applied and maintained upon the sensor whilst being turned through a predetermined angle, causing the tapered flange portion of the elastic member to be released from the through hole and expand such that it engages a second side surface of the sensor attachment member.

A further object of the present invention is to provide an improved structure for attaching a sensor to a sensor attachment member via an elastic member, having a hollow shape and being attached on a sensor protruding portion on the sensor to cover the sensor protruding portion such that the fore end portion of the sensor protruding portion protrudes from the elastic member, where the elastic member has a first flange formed on an outer surface on a second end thereof and a tapered flange portion on a first end side having a diameter which decreases toward the first end thereof, both flanges protruding outwardly in the radial direction thereof, and where the elastic member further is arranged to be inserted into a through hole of the sensor attachment member until the first flange abuts a first side surface of the sensor attachment member rendering the tapered flange portion at least partially deformed within the through hole.

According to a second aspect of the present invention this object is achieved in accordance with the characterizing portion of claim 11, which specifies that the sensor comprises at least one protruding engagement part; and at least one mounting member is arranged adjacent the through hole, and the protruding engagement part upon turning of the sensor in the trough hole is arranged to engage the mounting member; and the engagement between the mounting member and the protruding engagement part is arranged to, upon further turning of the sensor through a predetermined angle, cause a predetermined inserting pressure to be applied and maintained upon the sensor; and the tapered flange portion of the elastic member being arranged to, upon turning of the sensor through the predetermined angle, be released from the through hole and expand such that it engages a second side surface of the sensor attachment member.

Further embodiments are listed in the dependent claims,

It will be appreciated that features of the invention are susceptible to being combined in any combination without departing from the scope of the invention as defined by the accompany claims.

### BRIEF DESCRIPTION OF THE DRAWINGS

By way of example only, embodiments of the present invention will now be described with reference to the accompanying drawings wherein:
Figure 1 is a schematic illustration of the unattached sensor and the sensor attachment member according to a first embodiment; and
Figure 2 is a schematic illustration of the first step of inserting the sensor into the through hole of the sensor attachment member according to figure 1; and
Figure 3 is a schematic illustration of the second step of turning the sensor according to figure 2 to achieve initial engagement between the protruding engagement part of the sensor and the mounting member; and
Figure 4 is a schematic illustration of the third step of turning the sensor according to figure 3 further to achieve release of the tapered flange portion of the elastic member from the through hole such that it engages the sensor attachment member; and
Figure 5 is a schematic illustration of the unattached sensor and the sensor attachment member according to a second embodiment; and
Figure 6 is a schematic illustration of the first step of inserting the sensor into the through hole of the sensor attachment member according to figure 5; and
Figure 7 is a schematic illustration of the second step of turning the sensor according to figure 6 to achieve initial engagement between the protruding engagement part of the sensor and the mounting member; and
Figure 8 is a schematic illustration of the third step of turning the sensor according to figure 7 further to achieve release of the tapered flange portion of the elastic member from the through hole such that it engages the sensor attachment member.

Still other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures and procedures described herein. The same reference numerals will be used for illustrating corresponding features in the different drawings.

### DETAILED DESCRIPTION OF PREFERRED EMBODIMENTS

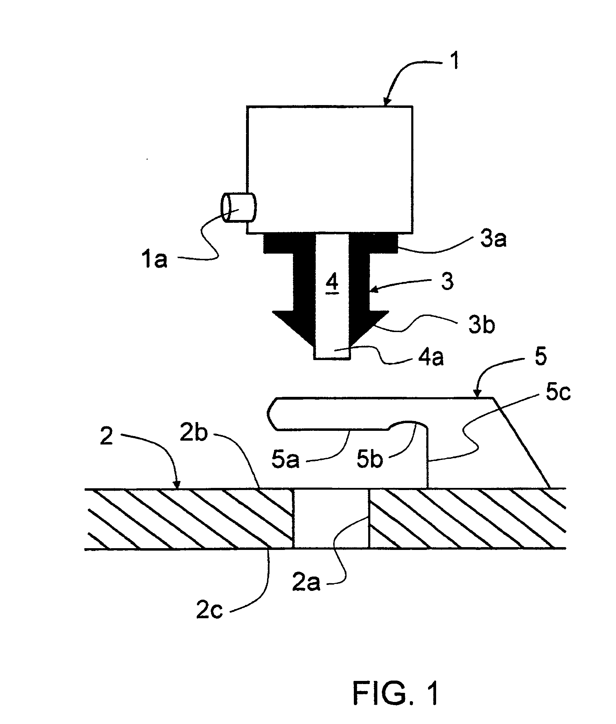

In a preferred first embodiment of the present invention, as shown in FIG. 1, an elastic member 3 for attaching a sensor 1 to a sensor attachment member 2 is attached on a sensor protruding portion 4 of the sensor 1, and is to be inserted into a through hole 2a formed in the sensor attachment member 2. On completion of a sensor attaching operation, the sensor 1 can be fixed to the through hole 2 via the elastic member 3.

As evident from the cross-section view of the elastic member 3 of FIG. 1, the elastic member 3 has a hollow shape and is attached on the sensor protruding portion 4 on the sensor 1 to cover the sensor protruding portion 4 such that the fore end portion 4a of the sensor protruding portion 4 protrudes from the elastic member 3. The elastic member 3 further has a first flange 3a formed on an outer surface on a second end thereof to protrude outwardly in a radial direction thereof. Still further, the elastic member 3 has a tapered flange portion 3b on a first end side having a diameter which decreases toward the first end thereof and protrudes outwardly in the radial direction thereof.

The elastic member 3 is integrally formed from elastic material such as silicone rubber. It should be noted that the material employable for the elastic member 3 should not be limited only to silicon rubber. Alternatively, various kinds of rubber, e. g., fluoric rubber, acrylic rubber, Fluor silicon rubber, ethylene propylene rubber (EPDM), acrylonitrile-butadiene rubber (NBR) and acrylonitrile-butadiene rubber containing hydrogen added thereto (H-NBR) may be employed as the material for the elastic member 3. Additionally, the elastic member 3 may be made of a material other than rubber, provided that the material has adequate elasticity.

Next, a method for attaching the sensor 1 to the sensor attachment member 2 in this first embodiment will be explained in more detail. The process includes three steps, i.e., an insertion step (which is referred to as a first step), an intermediate turning step (which is referred to as a second step), and a final turning step (which is referred to as a third step).

As illustrated in FIG: 2, in the inserting step, the elastic member 3 holding the sensor protruding portion 4a therein is inserted into the through hole 2a of the sensor attachment member 2 until the first flange 3a abuts a first side surface 2b of the sensor attachment member 2. This insertion will render the tapered flange portion 3b at least partially deformed within the through hole 2a.

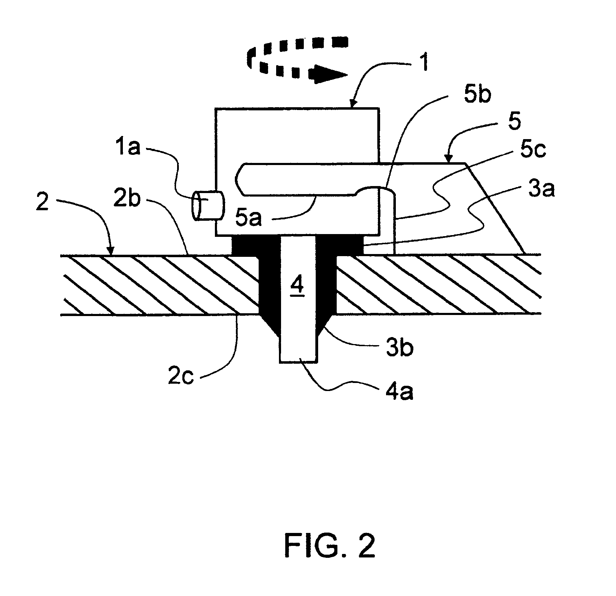

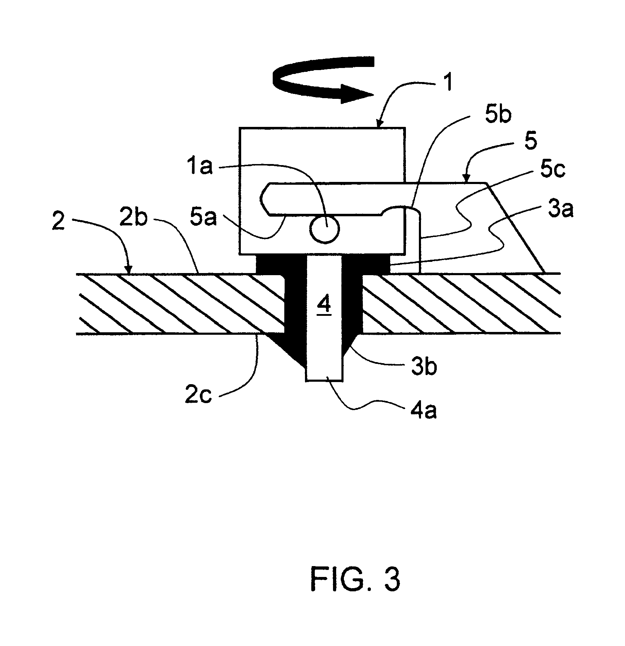

In the intermediate turning step, as illustrated in FIG. 2 and FIG. 3, while the above-mentioned inserted state is maintained, the sensor 1 is turned in a first direction (illustrated by the broken arrow of FIG. 2) around a centre axis of the trough hole 2a. The sensor 1 is turned such that at least one protruding engagement part 1a of the sensor 1 engages at least one mounting member 5, which is arranged adjacent the through hole 2a at the first side surface 2b of the sensor attachment member 2. The mounting member 5 is suitably arranged as a locking bridge, as illustrated in FIGS. 1 - 4.

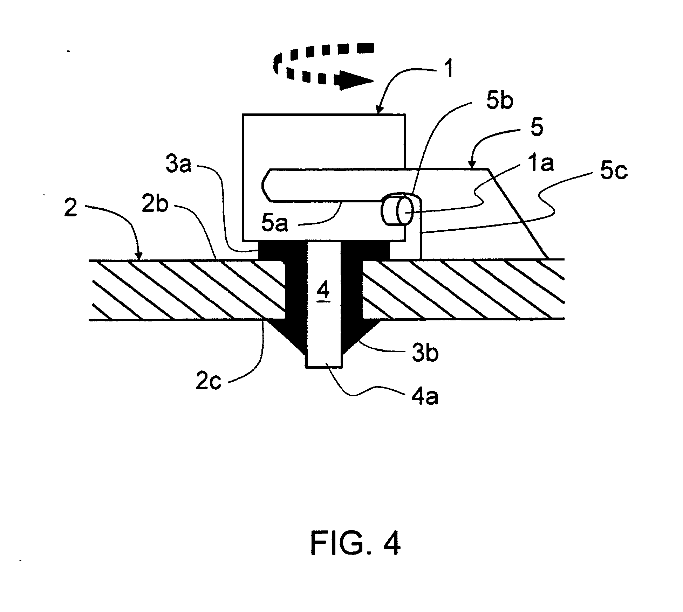

The final turning step is a step which is performed such that the sensor 1 is fixed to the sensor attachment member 4 via the elastic member 1 in a state shown in FIG. 4 by turning the sensor 1 further in the first direction (illustrated by the arrow of FIG. 3) through a predetermined angle. The engagement between the mounting member 5 and the protruding engagement part 1a is arranged to cause a predetermined inserting pressure to be applied and maintained upon the sensor 1 whilst being turned through the predetermined angle. Turning the sensor 1 and the associated the elastic member 3 will cause the tapered flange portion 3b of the elastic member 3 to become released from being deformed within the through hole 2a. Once released the tapered flange portion 3b is allowed to become enlarged through the elasticity inherent in its material and protrude outwardly in the radial direction of the through hole such that it engages the second side surface 2c of the sensor attachment member 2 thereby attaching the sensor 1 to the sensor attachment member 2 as illustrated in FIG. 4, resulting in a sealing airtight attachment of the sensor 1 to the sensor attachment member 2.

The protruding engagement part 1a will in the final turning step through the engagement with the mounting member 5 be forcing the entire sensor 1 to be inserted further into the trough hole 2a as a result of being clamped between the lower rim 5a of the mounting member 5 during turning of the sensor 1 through the predetermined angle, as illustrated in FIG. 3.

As the sensor 1 has been turned through the predetermined angle the tapered flange portion 3b of the elastic member 3 will protrude in its entirety from the through hole 2a. As a result, the sensor protruding portion 4 is fixed in the through hole 2a of the sensor attachment member 2 via the elastic member 3, as illustrated in FIG. 4. As a result, the elastic member 3 is prevented from disconnecting from the through hole 2a.

It has been found that the predetermined angle through which the sensor is to be turned should be at least 70 degrees. It should, however, be noted that the appropriate angle, through which the sensor 1 should be turned in order to release the tapered flange portion 3b, will be dependent on several factors, such as the geometry of the elastic member 3 and in particular the tapered flange portion 3b thereof as well as the properties of the elastic material used therefore.

In order to avoid unnecessary turning of the sensor 1, which could damage the elastic member 3, the engagement between the mounting member 5 and the protruding engagement part 1a should suitably be arranged to restrict further turning of the sensor 1 once the sensor 1 has been turned at least through the predetermined angle. This is suitably done through providing the mounting member 5 with an end stop 5c, which is arranged to prevent further turning as it is contacted by the protruding engagement part 1a of the sensor 1.

In order to ensure that no external forces interact with the sensor 1 upon completion of the mounting thereof to the sensor attachment member 5, the engagement between the mounting member 5 and the protruding engagement part 1a should suitably be arranged to be discontinued as turning of the sensor 1 reaches the predetermined angle, such that the predetermined inserting pressure is cancelled. This is suitably done through providing the mounting member 5 with a cut out section 5b, which is arranged to receive the protruding engagement part 1a of the sensor 1, once the sensor 1 has been turned at least through the predetermined angle.

The mounting member 5 may be provided as an integral part of the sensor attachment member 2, e.g. in the case of an automotive vehicle inlet manifold, cast as an integral part thereof. This is advantageous as the mounting member then also may be assigned additional functions, such as additionally securing the sensor 1 to its mounting position within the through hole 2a and with suitable design thereof possibly also protecting the sensor 1 physically. Alternatively, the mounting member 5 may be provided as a separate attachment fixture, which, once the sensor 1 has been attached to the sensor attachment member 2, may be removed and reused for a subsequent mounting operation.

The engagement between the mounting member 5 and the protruding engagement part 1a is suitably arranged to provide a confirmation of the sensor 1 having been turned through the predetermined angle as at least one of a tactile, a visual or an audible confirmation. This may is done through arranging the protruding engagement part 1a of the sensor 1 to snap into the cut out section 5b of the mounting member 5, once the sensor 1 has been turned at least through the predetermined angle.

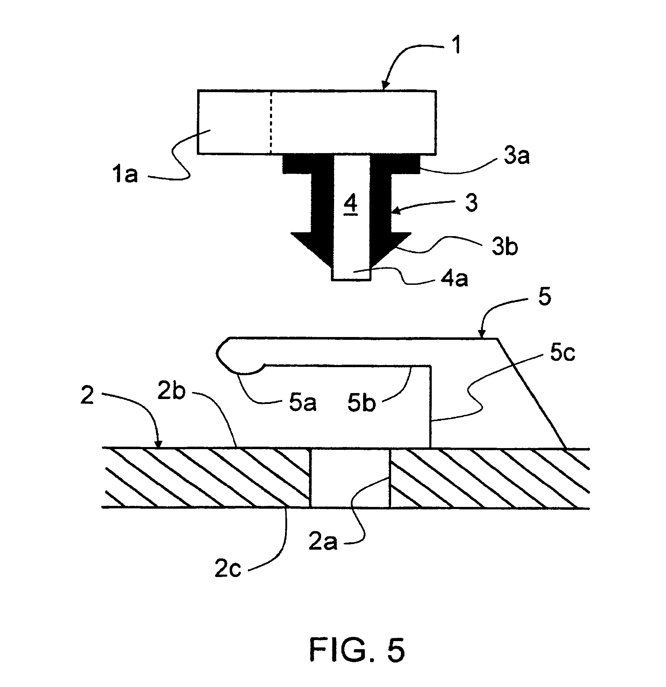

In a second embodiment of the present invention, as shown in FIG. 5, in similar way as in the previous embodiment an elastic member 3 for attaching a sensor 1 to a sensor attachment member 2 is attached on a sensor protruding portion 4 of the sensor 1, and is to be inserted into a through hole 2a formed in the sensor attachment member 2. On completion of a sensor attaching operation, the sensor 1 can be fixed to the through hole 2 via the elastic member 3.

As evident from the cross-section view of the elastic member 3 of FIG. 5, the elastic member 3 as in the first embodiment has a hollow shape and is attached on the sensor protruding portion 4 on the sensor 1 to cover the sensor protruding portion 4 such that the fore end portion 4a of the sensor protruding portion 4 protrudes from the elastic member 3. The elastic member 3 further has a first flange 3a formed on an outer surface on a second end thereof to protrude outwardly in a radial direction thereof. Still further, the elastic member 3 has a tapered flange portion 3b on a first end side having a diameter which decreases toward the first end thereof and protrudes outwardly in the radial direction thereof.

The elastic member 3 as in the first embodiment is integrally formed from elastic material such as silicone rubber. It should be noted that the material employable for the elastic member 3 should not be limited only to silicon rubber. Alternatively, various kinds of rubber, e.g., fluoric rubber, acrylic rubber, Fluor silicon rubber, ethylene propylene rubber (EPDM), acrylonitrile-butadiene rubber (NBR) and acrylonitrile-butadiene rubber containing hydrogen added thereto (H-NBR) may be employed as the material for the elastic member 3. Additionally, the elastic member 3 may be made of a material other than rubber, provided that the material has adequate elasticity.

Next, a method for attaching the sensor 1 to the sensor attachment member 2 in this second embodiment will be explained in more detail. The process includes three steps, i.e., an insertion step (which is referred to as a first step), an intermediate turning step (which is referred to as a second step), and a final turning step (which is referred to as a third step).

As illustrated in FIG: 6, in the inserting step, the elastic member 3 holding the sensor protruding portion 4a therein is inserted into the through hole 2a of the sensor attachment member 2 until the first flange 3a abuts a first side surface 2b of the sensor attachment member 2. This insertion will render the tapered flange portion 3b at least partially deformed within the through hole 2a.

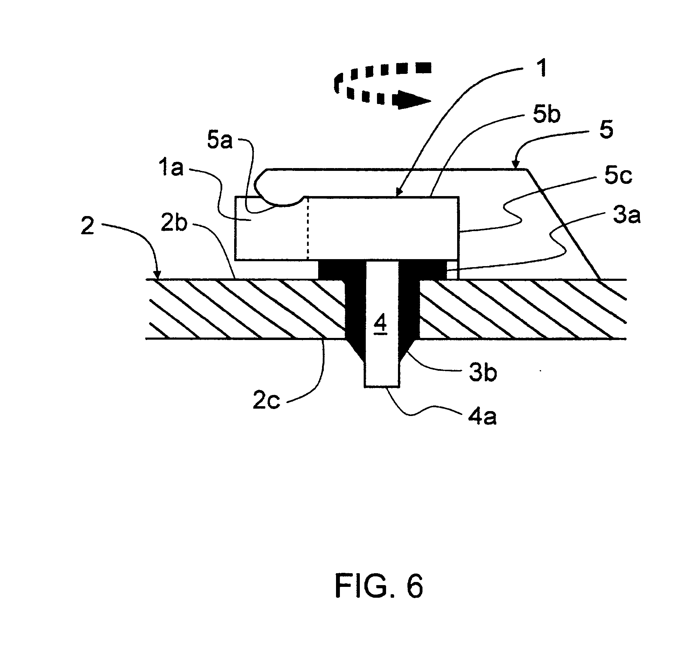

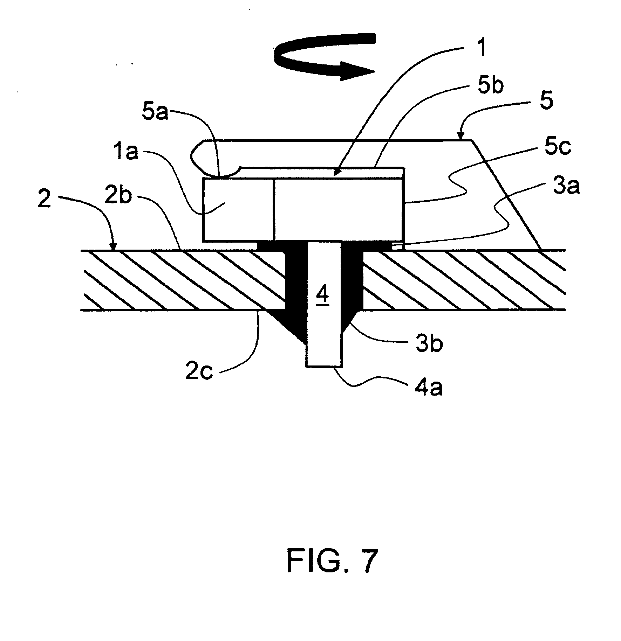

In the intermediate turning step, as illustrated in FIG. 6 and FIG. 7, while the above-mentioned inserted state is maintained, the sensor 1 is turned in a first direction (illustrated by the broken arrow of FIG. 6 and the arrow of FIG. 7) around a centre axis of the trough hole 2a. The sensor 1 is turned such that at least one protruding engagement part 1a of the sensor 1 engages at least one mounting member 5, which is arranged adjacent the through hole 2a at the first side surface 2b of the sensor attachment member 2. In this second embodiment the protruding engagement part 1a of the sensor 1 is an extension 1c of the main body of the sensor 1, which extension 1c in FIG. 5 is delimited by the dashed line through the sensor 1. The mounting member 5 is as in the first embodiment suitably arranged as a locking bridge, as illustrated in FIGS. 5 - 8.

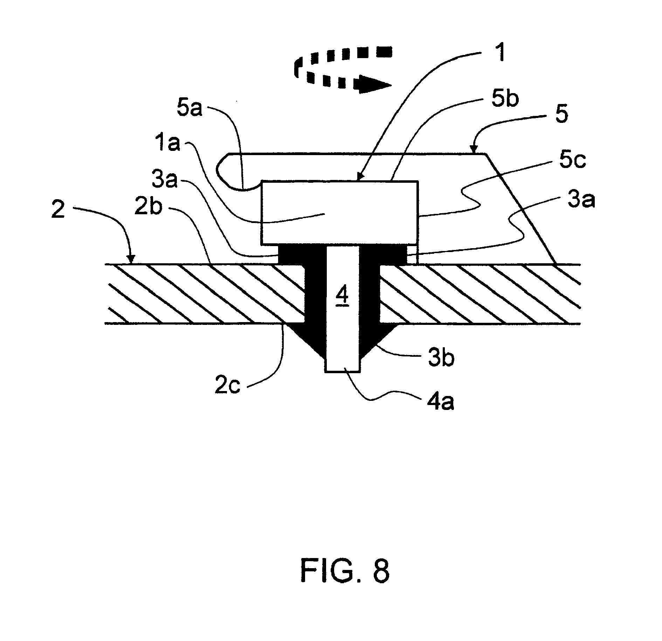

The final turning step is a step which is performed such that the sensor 1 is fixed to the sensor attachment member 4 via the elastic member 1 in a state shown in FIG. 8 by turning the sensor 1 further in the first direction (illustrated by the arrow of FIG. 7) through a predetermined angle. The engagement between the mounting member 5 and the protruding engagement part 1a is arranged to cause a predetermined inserting pressure to be applied and maintained upon the sensor 1 whilst being turned through the predetermined angle. The amount of predetermined inserting pressure is determined by the design of the engagement between the mounting member 5 and the protruding engagement part 1a and may be varied from being basically zero, with a very light or no engagement, to a substantial inserting pressure, with severe engagement. The material properties and geometry of the elastic member 3 may be used to determine a suitable inserting pressure, which may then be used as an input for designing the engagement between the mounting member 5 and the protruding engagement part 1a. The above is also true for the fist embodiment according to FIGS. 1 - 4.

Turning the sensor 1 and the associated the elastic member 3 will cause the tapered flange portion 3b of the elastic member 3 to become released from being deformed within the through hole 2a. Once released the tapered flange portion 3b is allowed to become enlarged through the elasticity inherent in its material and protrude outwardly in the radial direction of the through hole 2a such that it engages the second side surface 2c of the sensor attachment member 2 thereby attaching the sensor 1 to the sensor attachment member 2 as illustrated in FIG. 8, resulting in a sealing airtight attachment of the sensor 1 to the sensor attachment member 2.

The protruding engagement part 1a, i.e. the extension 1c of the main body of the sensor 1, will in the final turning step through the engagement with the mounting member 5 be forcing the entire sensor 1 to be inserted further into the trough hole 2a as a result of being clamped between the lower rim 5a of the mounting member 5 during turning of the sensor 1 through the predetermined angle, as illustrated in FIG. 7.

As the sensor 1 has been turned through the predetermined angle the tapered flange portion 3b of the elastic member 3 will protrude in its entirety from the through hole 2a. As a result, the sensor protruding portion 4 is fixed in the through hole 2a of the sensor attachment member 2 via the elastic member 3, as illustrated in FIG. 8. As a result, the elastic member 3 is prevented from disconnecting from the through hole 2a.

As for the first embodiment, it has been found that the predetermined angle through which the sensor is to be turned should be at least 70 degrees. It should, however, be noted that the appropriate angle, through which the sensor 1 should be turned in order to release the tapered flange portion 3b, will be dependent on several factors, such as the geometry of the elastic member 3 and in particular the tapered flange portion 3b thereof as well as the properties of the elastic material used therefore.

In order to avoid unnecessary turning of the sensor 1, which could damage the elastic member 3, the engagement between the mounting member 5 and the protruding engagement part 1a should suitably be arranged to restrict further turning of the sensor 1 once the sensor 1 has been turned at least through the predetermined angle. This is suitably done through providing the mounting member 5 with an end stop 5c, which is arranged to prevent further turning as it is contacted by the protruding engagement part 1a of the sensor 1.

In order to ensure that no external forces interact with the sensor 1 upon completion of the mounting thereof to the sensor attachment member 5, the engagement between the mounting member 5 and the protruding engagement part 1a should suitably be arranged to be discontinued as turning of the sensor 1 reaches the predetermined angle, such that the predetermined inserting pressure is cancelled. This is suitably done through providing the mounting member 5 with a cut out section 5b, which is arranged to receive the protruding engagement part 1a of the sensor 1, once the sensor 1 has been turned at least through the predetermined angle.

The mounting member 5 may be provided as an integral part of the sensor attachment member 2, e.g. in the case of an automotive vehicle inlet manifold, cast as an integral part thereof. This is advantageous as the mounting member then also may be assigned additional functions, such as additionally securing the sensor 1 to its mounting position within the through hole 2a and with suitable design thereof possibly also protecting the sensor 1 physically. Alternatively, the mounting member 5 may be provided as a separate attachment fixture, which, once the sensor 1 has been attached to the sensor attachment member 2, may be removed and reused for a subsequent mounting operation.

The engagement between the mounting member 5 and the protruding engagement part 1a is suitably arranged to provide a confirmation of the sensor 1 having been turned through the predetermined angle as at least one of a tactile, a visual or an audible confirmation. This may is done through arranging the protruding engagement part 1a of the sensor 1 to snap into the cut out section 5b of the mounting member 5, once the sensor 1 has been turned at least through the predetermined angle.

The above described method is especially suited for the mounting of so called manifold absolute pressure sensors (MAP sensors) to the intake manifold of automotive vehicles. Thus, the present invention is especially suited to be used for the mounting of sensors to automotive vehicle components within the automotive industry.

Modifications to embodiments of the invention described in the foregoing are possible without departing from the scope of the invention as defined by the accompanying claims.

Expressions such as "including", "comprising", "incorporating", "consisting of", "have", "is" used to describe and claim the present invention are intended to be construed in a non-exclusive manner, namely allowing for items, components or elements not explicitly described also to be present. Reference to the singular is also to be construed to relate to the plural and vice versa.

Numerals included within parentheses in the accompanying claims are intended to assist understanding of the claims and should not be construed in any way to limit subject matter claimed by these claims.

Thus, while there have been shown and described and pointed out fundamental novel features of the invention as applied to a preferred embodiment thereof, it will be understood that various omissions and substitutions and changes in the form and details of the devices illustrated, and in their operation, may be made by those skilled in the art. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

## Claims

1. A method for attaching a sensor (1) to a sensor attachment member (2) via an elastic member (3), having a hollow shape and being attached on a sensor protruding portion (4) on the sensor (1) to cover the sensor protruding portion (4) such that the fore end portion (4a) of the sensor protruding portion (4) protrudes from the elastic member (3), where the elastic member (3) has a first flange (3a) formed on an outer surface on a second end thereof and a tapered flange portion (3b) on a first end side having a diameter which decreases toward the first end thereof, both flanges protruding outwardly in the radial direction thereof; **characterised in that** it comprises the steps of:
inserting the elastic member (3) into a through hole (2a) of the sensor attachment member (2) until the first flange (3a) abuts a first side surface (2b) of the sensor attachment member (2) rendering the tapered flange portion (3b) at least partially deformed within the through hole (2a);
turning the sensor (1) in the trough hole (2a) such that at least one protruding engagement part (1a) of the sensor (1) engages at least one mounting member (5) arranged adjacent the through hole, and;
turning the sensor (1) further whereby the engagement between the mounting member (5) and the protruding engagement part (1a) is arranged to cause a predetermined inserting pressure to be applied and maintained upon the sensor (1) whilst being turned through a predetermined angle, causing the tapered flange portion (3b) of the elastic member (3) to be released from the through hole (2a) and expand such that it engages a second side surface (2c) of the sensor attachment member (2).

2. A method for attaching a sensor to a sensor attachment member according to claim 1, **characterised in that:**
in the step of turning the sensor (1) further the predetermined angle through which the sensor (1) is turned is at least 70 degrees.

3. A method for attaching a sensor to a sensor attachment member according to claim 2, **characterised in that** it further comprises a step of:
arranging the engagement between the mounting member (5) and the protruding engagement part (1 a) to restrict further turning of the sensor (1) once the sensor (1) has been turned at least through the predetermined angle.

4. A method for attaching a sensor to a sensor attachment member according to claim 3, **characterised in that:**
in the step of arranging the engagement between the mounting member (5) and the protruding engagement part (1a) to restrict further turning of the sensor (1) once the sensor (1) has been turned at least through the predetermined angle, this is done through providing the mounting member (5) with an end stop (5c), which is arranged to prevent further turning of the sensor (1) upon being contacted by the protruding engagement part (1 a) of the sensor (1) once the sensor (1) has been turned at least through the predetermined angle.

5. A method for attaching a sensor to a sensor attachment member according to any one of the preceding claims, **characterised in that** it further comprises the step of:
arranging the engagement between the mounting member (5) and the protruding engagement part (1a) to be discontinued, such that the predetermined inserting pressure is cancelled, once the sensor (1) has been turned at least through the predetermined angle.

6. A method for attaching a sensor to a sensor attachment member according to claim 5, **characterised in that**:
in the step of arranging the engagement between the mounting member (5) and the protruding engagement part (1a) to be discontinued, such that the predetermined inserting pressure is cancelled, once the sensor (1) has been turned at least through the predetermined angle, this is done through providing the mounting member (5) with a cut out section (5b), which is arranged to receive the protruding engagement part (1a) of the sensor (1), once the sensor (1) has been turned at least through the predetermined angle.

7. A method for attaching a sensor to a sensor attachment member according to any one of the preceding claims, **characterised in that** it further comprises the step of:
providing the mounting member (5) as an integral part of the sensor attachment member (2).

8. A method for attaching a sensor to a sensor attachment member according to any one of claims 1 to 6, **characterised in that** it further comprises the step of:
providing the mounting member (5) as a separate attachment fixture and removing the mounting member (5) once the sensor (1) has been attached to the sensor attachment member (2).

9. A method for attaching a sensor to a sensor attachment member according to any one of the preceding claims, **characterised in that** it further comprises the step of:
arranging the engagement between the mounting member (5) and the protruding engagement part (1a) to provide a confirmation of the sensor (1) having been turned through the predetermined angle as at least one of a tactile, a visual or an audible confirmation.

10. A method for attaching a sensor to a sensor attachment member according to claim 9, **characterised in that**;
in the step of arranging the engagement between the mounting member (5) and the protruding engagement part (1 a) to provide a confirmation of the sensor (1) having been turned through the predetermined angle as at least one of a tactile, a visual or an audible confirmation, this is done through arranging the protruding engagement part (1a) of the sensor (1) to snap into the cut out section (5b) of the mounting member (5), once the sensor (1) has been turned at least through the predetermined angle.

11. A structure for attaching a sensor (1) to a sensor attachment member (2) via an elastic member (3), having a hollow shape and being attached on a sensor protruding portion (4) on the sensor (1) to cover the sensor protruding portion (4) such that the fore end portion (4a) of the sensor protruding portion (4) protrudes from the elastic member (3), where the elastic member (3) has a first flange (3a) formed on an outer surface on a second end thereof and a tapered flange portion (3b) on a first end side having a diameter which decreases toward the first end thereof, both flanges protruding outwardly in the radial direction thereof;
where the elastic member (3) is arranged to be inserted into a through hole (2a) of the sensor attachment member (2) until the first flange (3a) abuts a first side surface (2b) of the sensor attachment member (2) rendering the tapered flange portion (3b) at least partially deformed within the through hole (2a);
**characterised in that:**
the sensor (1) comprises at least one protruding engagement part (1a); and
at least one mounting member (5) is arranged adjacent the through hole, and ; the protruding engagement part (1a) upon turning of the sensor (1) in the trough hole (2a) is arranged to engage the mounting member (5); and
the engagement between the mounting member (5) and the protruding engagement part (1a) is arranged to, upon further turning of the sensor (1) through a predetermined angle, cause a predetermined inserting pressure to be applied and maintained upon the sensor (1); and
the tapered flange portion (3b) of the elastic member (3) being arranged to, upon turning of the sensor (1) through the predetermined angle, be released from the through hole (2a) and expand such that it engages a second side surface of the sensor attachment member (2).

## Patentansprüche

1. Verfahren zum Befestigen eines Sensors (1) an einem Sensorbefestigungsorgan (2) über ein elastisches Organ (3), das eine hohle Form hat und an einem vorstehenden Sensorabschnitt (4) am Sensor (1) befestigt ist, um den vorstehenden Sensorabschnitt (4) abzudecken, derart, dass der vordere Endabschnitt (4a) des vorstehenden Sensorabschnitts (4) von dem elastischen Organ (3) vorsteht, wobei das elastische Organ (3) einen an einer äußeren Oberfläche eines zweiten Endes hiervon ausgebildeten ersten Flansch (3a) und an einer ersten Stirnseite einen konisch zulaufenden Flanschabschnitt (3b), dessen Durchmesser zum ersten Ende abnimmt, besitzt, wobei beide Flansche in seiner radialen Richtung nach außen vorstehen;
**dadurch gekennzeichnet, dass** es die folgenden Schritte umfasst:
Einsetzen des elastischen Organs (3) in ein Durchgangsloch (2a) des Sensorbefestigungsorgans (2), bis der erste Flansch (3a) an einer ersten Seitenoberfläche (2b) des Sensorbefestigungsorgans (2) anliegt, wodurch der konisch zulaufende Flanschabschnitt (3b) in dem Durchgangsloch (2a) wenigstens teilweise verformt wird;
Drehen des Sensors (1) in dem Durchgangsloch (2a), derart, dass wenigstens ein vorstehender Eingriffabschnitt (1a) des Sensors (1) mit wenigstens einem benachbart zu dem Durchgangsloch angeordneten Montageorgan (5) in Eingriff ist; und
Weiterdrehen des Sensors (1), wodurch der Eingriff zwischen dem Montageorgan (5) und dem vorstehenden Eingriffabschnitt (1a) so ausgebildet wird, dass bewirkt wird, dass ein vorgegebener Einsetzdruck auf den Sensor (1) ausgeübt und aufrechterhalten wird, während er um einen vorgegebenen Winkel gedreht wird, was bewirkt, dass der konisch zulaufende Flanschabschnitt (3b) des elastischen Organs (3) von dem Durchgangsloch (2a) gelöst wird und sich ausdehnt, derart, dass er mit einer zweiten Seitenoberfläche (2c) des Sensorbefestigungsorgans (2) in Eingriff gelangt.

2. Verfahren zum Befestigen eines Sensors an einem Sensorbefestigungsorgan nach Anspruch 1, **dadurch gekennzeichnet, dass**:
in dem Schritt des Weiterdrehens des Sensors (1) um den vorgegebenen Winkel, um den der Sensor (1) gedreht wird, wenigstens 70 Grad beträgt.

3. Verfahren zum Befestigen eines Sensors an einem Sensorbefestigungsorgan nach Anspruch 2, **dadurch gekennzeichnet, dass** es ferner den folgenden Schritt umfasst:
Ausbilden des Eingriffs zwischen dem Montageorgan (5) und dem vorstehenden Eingriffabschnitt (1a) in der Weise, dass ein Weiterdrehen des Sensors (1) beschränkt wird, sobald der Sensor (1) zumindest um den vorgegebenen Winkel gedreht worden ist.

4. Verfahren zum Befestigen eines Sensors an einem Sensorbefestigungsorgan nach Anspruch 3, **dadurch gekennzeichnet, dass**:
im Schritt des Ausbildens des Eingriffs zwischen dem Montageorgan (5) und dem vorstehenden Eingriffabschnitt (1a) in der Weise, dass ein Weiterdrehen des Sensors (1) beschränkt wird, sobald der Sensor (1) zumindest um den vorgegebenen Winkel gedreht worden ist, dies **dadurch** geschieht, dass das Montageorgan (5) mit einem Endanschlag (5c) versehen wird, der ausgelegt ist, um ein Weiterdrehen des Sensors (1) zu verhindern, wenn er durch den vorstehenden Eingriffabschnitt (1a) des Sensors (1) berührt wird, sobald der Sensor (1) zumindest um den vorgegebenen Winkel gedreht worden ist.

5. Verfahren zum Befestigen eines Sensors an einem Sensorbefestigungsorgan nach einem der vorhergehenden Ansprüche, **dadurch gekennzeichnet, dass** es ferner den folgenden Schritt umfasst:
Ausbilden des Eingriffs zwischen dem Montageorgan (5) und dem vorstehenden Eingriffabschnitt (1a) in der Weise, dass er nicht fortgesetzt wird, so dass der vorgegebene Einsetzdruck beseitigt wird, sobald der Sensor (1) zumindest um den vorgegebenen Winkel gedreht worden ist.

6. Verfahren zum Befestigen eines Sensors an einem Sensorbefestigungsorgan nach Anspruch 5, **dadurch gekennzeichnet, dass**:
im Schritt des Ausbildens des Eingriffs zwischen dem Montageorgan (5) und dem vorstehenden Eingriffabschnitt (1a) in der Weise, dass er nicht fortgesetzt wird, so dass der vorgegebene Einsetzdruck beseitigt wird, sobald der Sensor (1) zumindest um den vorgegebenen Winkel gedreht worden ist, dies **dadurch** geschieht, dass das Montageorgan (5) mit einem ausgeschnittenen Abschnitt (5b) versehen wird, der so beschaffen ist, dass er den vorstehenden Eingriffabschnitt (1a) des Sensors (1) aufnimmt, sobald der Sensor (1) zumindest um den vorgegebenen Winkel gedreht worden ist.

7. Verfahren zum Befestigen eines Sensors an einem Sensorbefestigungsorgan nach einem der vorhergehenden Ansprüche, **dadurch gekennzeichnet, dass** es ferner den folgenden Schritt umfasst:
Vorsehen des Montageorgans (5) einteilig mit dem Sensorbefestigungsorgan (2).

8. Verfahren zum Befestigen eines Sensors an einem Sensorbefestigungsorgan nach einem der Ansprüche 1 bis 6, **dadurch gekennzeichnet, dass** es ferner den folgenden Schritt umfasst:
Vorsehen des Montageorgans (5) als eine getrennte Befestigungseinrichtung und Entfernen des Montageorgans (5), sobald der Sensor (1) an dem Sensorbefestigungsorgan (2) befestigt worden ist.

9. Verfahren zum Befestigen eines Sensors an einem Sensorbefestigungsorgan nach einem der vorhergehenden Ansprüche, **dadurch gekennzeichnet, dass** es ferner den folgenden Schritt umfasst:
Ausbilden des Eingriffs zwischen dem Montageorgan (5) und dem vorstehenden Eingriffabschnitt (1a) in der Weise, dass eine Bestätigung als taktile und/oder visuelle und/oder hörbare Bestätigung dafür geschaffen wird, dass der Sensor (1) um den vorgegebenen Winkel gedreht worden ist.

10. Verfahren zum Befestigen eines Sensors an einem Sensorbefestigungsorgan nach Anspruch 9, **dadurch gekennzeichnet, dass**:
im Schritt des Ausbildens des Eingriffs zwischen dem Montageorgan (5) und dem vorstehenden Eingriffabschnitt (1a), um eine Bestätigung als taktile und/oder visuelle und/oder hörbare Bestätigung dafür zu schaffen, dass der Sensor um den vorgegebenen Winkel gedreht worden ist, dies **dadurch** geschieht, dass der vorstehende Eingriffabschnitt (1a) des Sensors (1) in den ausgeschnittenen Abschnitt (5b) des Montageorgans (5) einrastet, sobald der Sensor (1) zumindest um den vorgegebenen Winkel gedreht worden ist.

11. Anordnung zum Befestigen eines Sensors (1) an einem Sensorbefestigungsorgan (2) über ein elastisches Organ (3), das eine hohle Form besitzt und an einem vorstehenden Sensorabschnitt (4) am Sensor (1) befestigt ist, um den vorstehenden Sensorabschnitt (4) abzudecken, derart, dass der vordere Endabschnitt (4a) des vorstehenden Sensorabschnitts (4) von dem elastischen Organ (3) vorsteht, wobei das elastische Organ (3) einen an einer äußeren Oberfläche seines zweiten Endes ausgebildeten ersten Flansch (3a) und an einer ersten Stirnseite einen konisch zulaufenden Flansch (3b), dessen Durchmesser in Richtung zu seinem ersten Ende abnimmt, besitzt, wobei beide Flansche in seiner radialen Richtung nach außen vorstehen;
wobei das elastische Organ (3) so beschaffen ist, dass es in ein Durchgangsloch (2a) des Sensorbefestigungsorgans (2) eingesetzt wird, bis der erste Flansch (3a) an einer ersten Seitenoberfläche (2b) des Sensorbefestigungsorgans (2) anliegt, wodurch der konisch zulaufende Flanschabschnitt (3b) in dem Durchgangsloch (2a) zumindest teilweise verformt wird;
**dadurch gekennzeichnet, dass**:
der Sensor (1) wenigstens einen vorstehenden Eingriffabschnitt (1a) aufweist; und
wenigstens ein Montageorgan (5) benachbart zu dem Durchgangsloch angeordnet ist; und
der vorstehende Eingriffabschnitt (1a) ausgelegt ist, um dann, wenn der Sensor (1) in dem Durchgangsloch (2a) gedreht wird, mit dem Montageorgan (5) in Eingriff zu gelangen; und
der Eingriff zwischen dem Montageorgan (5) und dem vorstehenden Eingriffabschnitt (1a) so ausgebildet ist, dass bei einem Weiterdrehen des Sensors (1) um einen vorgegebenen Winkel bewirkt wird, dass ein vorgegebener Einsetzdruck auf den Sensor (1) ausgeübt und aufrechterhalten wird; und
der konisch zulaufende Flanschabschnitt (3b) des elastischen Organs (3) so beschaffen ist, dass er dann, wenn der Sensor (1) um den vorgegebenen Winkel gedreht worden ist, von dem Durchgangsloch (2a) freigegeben wird und sich ausdehnt, derart, dass er mit einer zweiten Seitenoberfläche des Sensorbefestigungsorgans (2) in Eingriff gelangt.

## Revendications

1. Procédé de fixation d'un capteur (1) à un élément de fixation (2) d'un capteur par l'intermédiaire d'un élément élastique (3), ayant une forme creuse et fixé sur le capteur (1) à une portion saillante (4) du capteur afin de recouvrir la portion saillante (4) du capteur de telle sorte que la portion d'extrémité avant (4a) de la portion saillante (4) du capteur dépasse de l'élément élastique (3), l'élément élastique (3) ayant une première bride (3a) formée sur une surface extérieure sur une deuxième extrémité de celui-ci et une portion de bride conique (3b) sur un premier côté d'extrémité ayant un diamètre qui décroît vers sa première extrémité, les deux brides saillant extérieurement dans la direction radiale de celui-ci,
***caractérisé en ce qu*'**il comprend les étapes consistant à :
insérer l'élément élastique (3) dans un trou traversant (2a) de l'élément de fixation (2) du capteur jusqu'à ce que la première bride (3a) vienne en butée contre une première surface latérale (2b) de l'élément de fixation (2) du capteur, entraînant la déformation au moins partielle de la portion de bride conique (3b) dans le trou traversant (2a) ;
faire tourner le capteur (1) dans le trou traversant (2a) de telle sorte qu'au moins une partie d'engagement saillante (1a) du capteur (1) engage au moins un élément de montage (5) placé de manière adjacente au trou traversant, et ;
continuer de faire tourner le capteur (1), ce qui fait que l'engagement entre l'élément de montage (5) et la partie d'engagement saillante (1a) vient à provoquer l'application d'une pression d'insertion prédéterminée sur le capteur (1) et à la maintenir tout en tournant d'un angle prédéterminé, provoquant la libération de la portion de bride conique (3b) de l'élément élastique (3) du trou traversant (2a) et sa détente de telle sorte qu'elle engage une deuxième surface latérale (2c) de l'élément de fixation (2) du capteur.

2. Procédé de fixation d'un capteur à un élément de fixation d'un capteur selon la revendication 1, ***caractérisé en ce que** :*
dans l'étape consistant à continuer de faire tourner le capteur (1), l'angle prédéterminé duquel tourne le capteur (1) est d'au moins 70 degrés.

3. Procédé de fixation d'un capteur à un élément de fixation d'un capteur selon la revendication 2, ***caractérisé en ce qu*'**il comprend en plus l'étape consistant à :
agencer l'engagement entre l'élément de montage (5) et la partie d'engagement saillante (1a) pour qu'il empêche le capteur (1) de continuer à tourner une fois que le capteur (1) a tourné d'au moins l'angle prédéterminé.

4. Procédé de fixation d'un capteur à un élément de fixation d'un capteur selon la revendication 3, ***caractérisé en ce que** :*
dans l'étape d'agencement de l'engagement entre l'élément de montage (5) et la partie d'engagement saillante (1a) pour empêcher le capteur (1) de continuer à tourner une fois que le capteur (1) a tourné d'au moins l'angle prédéterminé, ceci est réalisé en prévoyant sur l'élément de montage (5) une butée d'extrémité (5c), qui est prévue pour empêcher le capteur (1) de continuer à tourner lorsqu'il est arrive au contact de la partie d'engagement saillante (1a) du capteur (1) une fois que le capteur (1) a tourné d'au moins l'angle prédéterminé.

5. Procédé de fixation d'un capteur à un élément de fixation d'un capteur selon l'une quelconque des revendications précédentes, ***caractérisé en ce qu*'**il comprend en plus l'étape consistant à :
agencer l'engagement entre l'élément de montage (5) et la partie d'engagement saillante (1a) pour qu'il soit discontinu, de telle sorte que la pression d'insertion prédéterminée soit annulée une fois que le capteur (1) a tourné d'au moins l'angle prédéterminé.

6. Procédé de fixation d'un capteur à un élément de fixation d'un capteur selon la revendication 5, ***caractérisé en ce que** :*
dans l'étape d'agencement de l'engagement entre l'élément de montage (5) et la partie d'engagement saillante (1a) pour qu'il soit discontinu, de telle sorte que la pression d'insertion prédéterminée soit annulée une fois que le capteur (1) a tourné d'au moins l'angle prédéterminé, ceci est réalisé en prévoyant sur l'élément de montage (5) une section découpée (5b), qui est prévue pour recevoir la partie d'engagement saillante (1a) du capteur (1) une fois que le capteur (1) a tourné d'au moins l'angle prédéterminé.

7. Procédé de fixation d'un capteur à un élément de fixation d'un capteur selon l'une quelconque des revendications précédentes, ***caractérisé que ce qu*'**il comprend en plus l'étape consistant à :
fournir l'élément de montage (5) sous forme de partie intégrale de l'élément de fixation (2) du capteur.

8. Procédé de fixation d'un capteur à un élément de fixation d'un capteur selon l'une quelconque des revendications 1 à 6, ***caractérisé que ce qu***'il comprend en plus l'étape consistant à :
fournir l'élément de montage (5) sous forme de dispositif de fixation séparé et à retirer l'élément de montage (5) une fois que le capteur (1) a été fixé à l'élément de fixation (2) du capteur.

9. Procédé de fixation d'un capteur à un élément de fixation d'un capteur selon l'une quelconque des revendications précédentes, ***caractérisé que ce qu***'il comprend en plus l'étape consistant à :
agencer l'engagement entre l'élément de montage (5) et la partie d'engagement saillante (1a) pour que soit fournie une confirmation que le capteur (1) a tourné de l'angle prédéterminé sous la forme d'une confirmation tactile, visuelle ou audible.

10. Procédé de fixation d'un capteur à un élément de fixation d'un capteur selon la revendication 9, ***caractérisé en ce que** :*
dans l'étape d'agencement de l'engagement entre l'élément de montage (5) et la partie d'engagement saillante (1a) pour que soit fournie une confirmation que le capteur (1) a tourné de l'angle prédéterminé sous la forme d'une confirmation tactile, visuelle ou audible, ceci est réalisé en agençant la partie d'engagement saillante (1a) du capteur (1) de façon qu'elle s'encliquette dans la section découpée (5b) de l'élément de montage (5) une fois que le capteur (1) a tourné d'au moins l'angle prédéterminé.

11. Structure de fixation d'un capteur (1) à un élément de fixation (2) d'un capteur par l'intermédiaire d'un élément élastique (3), ayant une forme creuse et fixé sur le capteur à une portion saillante (4) du capteur (1) afin de recouvrir la portion saillante (4) du capteur de telle sorte que la portion d'extrémité avant (4a) de la portion saillante (4) du capteur dépasse de l'élément élastique (3), l'élément élastique (3) ayant une première bride (3a) formée sur une surface extérieure sur une deuxième extrémité de celui-ci et une portion de bride conique (3b) sur un premier côté d'extrémité ayant un diamètre qui décroît vers sa première extrémité, les deux brides saillant extérieurement dans la direction radiale de celui-ci ; dans laquelle l'élément élastique (3) est agencé de manière à être inséré dans un trou traversant (2a) de l'élément de fixation (2) du capteur jusqu'à ce que la première bride (3a) vienne en butée contre une première surface latérale (2b) de l'élément de fixation (2) du capteur, entraînant la déformation au moins partielle de la portion de bride conique (3b) dans le trou traversant (2a) ;
***caractérisée en ce que* :**
le capteur (1) comprend au moins une partie d'engagement saillante (1a) ; et
au moins un élément de montage (5) est placé de manière adjacente au trou traversant, et
la partie d'engagement saillante (1a), lorsqu'on fait tourner le capteur (1) dans le trou traversant (2a), est agencée pour engager l'élément de montage (5) ; et
l'engagement entre l'élément de montage (5) et la partie d'engagement saillante (1a) est agencée pour, lorsqu'on continue de faire tourner le capteur (1) d'un angle prédéterminé, provoquer l'application d'une pression d'insertion prédéterminée sur le capteur (1) et maintenir celle-ci sur le capteur (1) ; et
la portion de bride conique (3b) de l'élément élastique (3) étant prévue pour, lorsque le capteur (1) tourne de l'angle prédéterminé, être libérée du trou traversant (2a) et se détendre de telle sorte qu'elle engage une deuxième surface latérale de l'élément de fixation (2) du capteur.
